# EUROPEAN PATENT SPECIFICATION

(11) **EP 1 991 434 B1**
(45) Date of publication and mention of the grant of the patent: **30.03.2011**
(21) Application number: 06736099.0
(22) Date of filing: 24.02.2006
(51) Int. Cl.: B60H 1/32, F25D 19/00

(54) **GRILLE SURROUND ASSEMBLY FOR TRANSPORT REFRIGERATION UNIT**
GITTEREINFASSUNGSANORDNUNG FÜR TRANSPORTKÜHLEINHEIT
ENSEMBLE ENTOURANT UNE GRILLE POUR UNITE DE REFRIGERATION DE TRANSPORT

(43) Date of publication of application: 19.11.2008
(73) Proprietor: Carrier Corporation, Farmington CT 06034 (US)
(72) Inventor: KHAN, Shafi, N., Cicero, NY 13039 (US)
(74) Representative: Leckey, David Herbert
(86) International application number: PCT/US2006/006694
(87) International publication number: WO 2007/097758

(56) References cited:
- US-A- 3 112 623
- US-A- 3 245 224
- US-A- 4 976 115
- US-A- 5 388 424
- US-A1- 2005 044 867
- US-B2- 6 907 747

## Description

### Field of the Invention

The present invention relates generally to the art of transport refrigeration units and in particular to outer protective covers for such units.

A typical transport refrigeration unit of the type designed for mounting on the front face of a tractor trailer unit comprises a one piece, self contained fully refrigerant charged, prewired, refrigerant/heating unit powered by a diesel engine. In such a design the evaporator fits into a rectangular opening in the upper portion of the trailer front wall. When installed, the evaporator section is located inside the trailer; and the condensing section is outside and on the front of the trailer. The condensing section consists of an engine-compressor drive package, condenser fan, condenser coil, radiator coil, control panel, relay module, refrigerant controls, piping, wiring and associated components.

Structural frame members support all of the components and facilitate attaching of the unit to the trailer front face. Also supported by the structural framework is an outer cover which includes the necessary air inlet and outlet openings for cooling, and doors which may be opened to provide access to the interior of the unit for maintenance and service.

The air inlet for cooling of the condenser coil is providing by way of a grille located at the upper, front face of the cover. The grille is normally composed of a rigid plastic material that is durable but is generally susceptible to cracking from vibrations induced from the frame. This occurs because the structure surrounding the grille and attaching it to the frame is normally composed of metal or a rigid plastic material, thus facilitating the transmission of the vibrations from the frame, through the surround material, to the grille.

A transport refrigeration unit having the features of the preamble of claim 1 is disclosed in US-A-5388424.

### Summary of the Invention

In accordance with the present invention there is provided a transport refrigeration unit as set forth in claim 1.

Thus, the structure surrounding the grille and attaching it to the frame is a flexible material which acts to dampen vibrations from the frame to the decorative grille to thereby reduce cracking of the grille structure.

The surround material may be composed of a thermoplastic olefin (TPO) which is generally complaint and functions well in damping vibrations that would ordinarily be transmitted into the grille.

The grille may be fastened to the surround structure by way of a plurality of fasteners.

In the drawings as hereinafter described, a preferred embodiment is depicted; however, various other modifications and alternate constructions can be made thereto without departing from the scope of the invention as set forth in the claims.

### Brief Description of the Drawings

FIG. 1 is a perspective view of a transport refrigeration unit having a cover having the present invention incorporated therein.

FIG. 2 is an exploded view of the surround support structure and the grille in accordance with the present invention.

FIG. 3 is an exploded perspective view of the frame and the grille as attached to the surround structure.

FIG. 4 is another perspective view thereof as seen from below.

### Detailed Description of the Preferred Embodiment

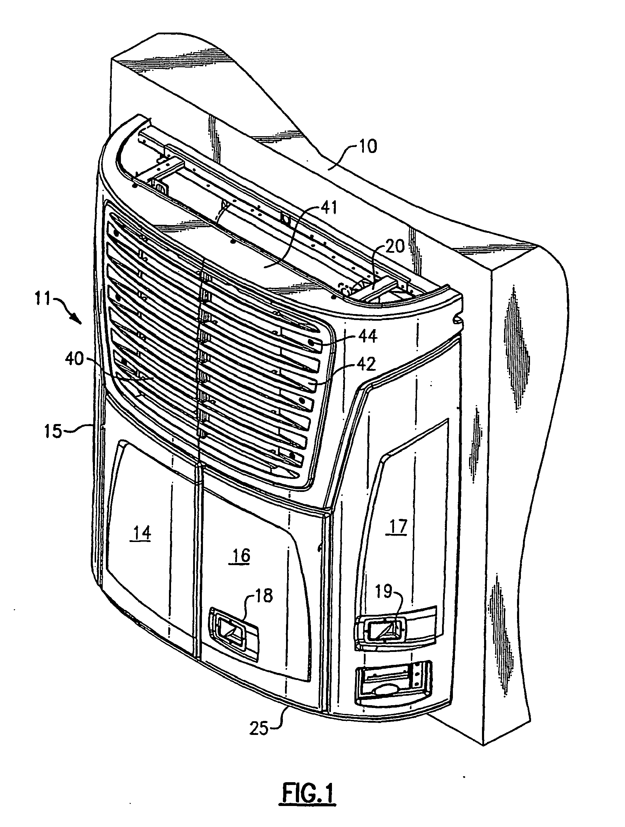

In FIG. 1 a fragmentary front part of a large transport trailer 10 is shown with a transport refrigeration unit 11 mounted on the front wall of the trailer. For purposes of the present description the terms "roadside" and "curbside" will be used in describing various components of the refrigeration unit and its cover. As viewed in FIG. 1, the right hand side of the unit will be referred to as the roadside and the left hand side of the unit as the curbside of the unit.

With this reference, the unit as illustrated in FIG. 1 has the curbside front door 14, and, the roadside front door 16 of the unit cover in their closed positions but containing the inner structural components of the unit as well as some of the components of the refrigeration unit itself. Attachment of the refrigeration unit 11 to the trailer 10 is carried out by connection of an outer peripheral planar structural steel framework illustrated generally by reference numeral 20. It should be appreciated that this framework is not normally visible when the unit is properly installed on a trailer unit, however for purposes of illustration, at least a portion of the structural framework is illustrated in FIG. 1.

All of the component assemblies which define the outer cover of the refrigeration unit 11 are mounted to the various structural components. Each of the doors forming the lower portion of the cover are made from a tough, light-weight composite material designed to resist rust, denting, warping, fading or peeling of their outer finish. These components include the front curbside door 14 and the inner roadside door 16 previously referred to above. They also include the curbside outer door 15 and the roadside outer door 17.

The front doors 14 and 16 are vertically hinged at their respective outer edges to provide a large access opening at the front of the unit. The side doors 15 and 17 are vertically hinged at their rear edges such that they pivot open from front to back. Latches 18 and 19 are provided for latching and unlatching the front roadside door 16 and side roadside door 17, respectively.

The upper part of the unit cover comprises a rigid front grille member 40 and a flexible support structure 41 disposed in surrounding relationship therewith. The grille member 40 is positioned in overlying relationship with the condenser heat exchanger of the refrigeration unit and is provided with a large number of openings 42 therethrough to facilitate air flow for efficient heat transfer. The support member 41 is secured to the frame 20 and the front grille is fastened to the support structure 41 by appropriate fastening means as at 44.

A cover bottom panel 25 is attached to the unit for purposes of closure and to improve the aesthetics of the unit.

It will be appreciated therefore that the door and grille components described above are designed to cooperate to fully enclose the refrigeration unit 11 to provide protection from the environment and road hazards and to aerodynamically and aesthetically enhance the unit.

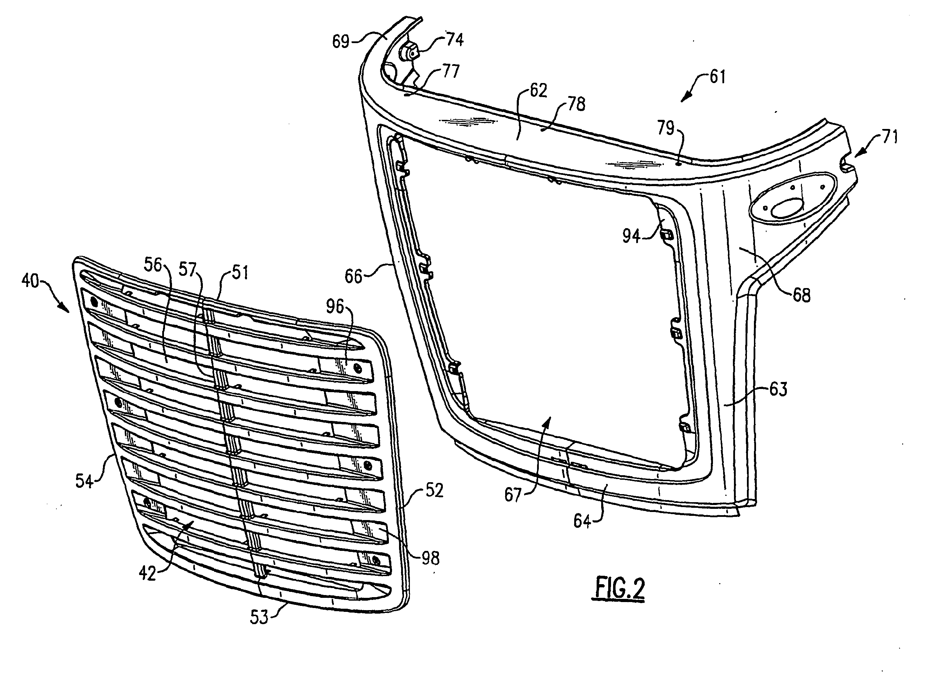

Referring now to Figs. 2-4, the front grille member 40 is shown as generally rectangular in shape having sides 51, 52, 53 and 54. It is slightly curved from front to back so as to wrap around the front face as shown. It has a plurality of horizontally disposed, and vertically spaced, louver members 56, with vertically disposed spacer members 57 therebetween to define in combination the plurality of openings 42 for the flow of air to the condenser coil 58.

Surrounding the grille member 40 is a grille support or surround structure 61 having a top 62 bordering the grille side 51, a side 63 bordering grille side 52, a bottom 64 bordering the grille side 53, and a side 66 bordering grille side 54 of the grille member 40, all integrally formed in a single piece having a central, rectangular shaped opening 67 for accommodating the attachment of the grill member 40 and the flow of air therethrough. Both the top 62 and the bottom 64 have rounded edges and extend rearwardly. The sides 63 and 66 also have rounded front edges and extend rearwardly in a curved manner, but also have rearwardly extending wing structures 68 and 69, respectively.

For purposes of fastening the grille support structure 61 to the frame 20, the wing structures 68 and 69 have respective indentions 71 and 72 with bottom surfaces 73 and 74 for the receiving of fasteners 76 therethrough for the purpose of securing the wing structures 68 and 69 to the frame 20. In the top 62 of the surround structure 61 are three holes 77, 78 and 79 formed near the rear edge thereof for securing the top 62 to the horizontal frame member 81 by way of fasteners 82. Similarly, attached to and extending rearwardly from the bottom 53 of the surround structure 61 is a flange 83 having holes 84, 86 and 87 formed therein. The flange 83 is aligned with a similar flange 88 extending forwardly from the frame 20 and having holes 89, 91 and 92 formed therein. The two flanges 83 and 88 then are connected by way of fasteners 93 passing into the respective openings.

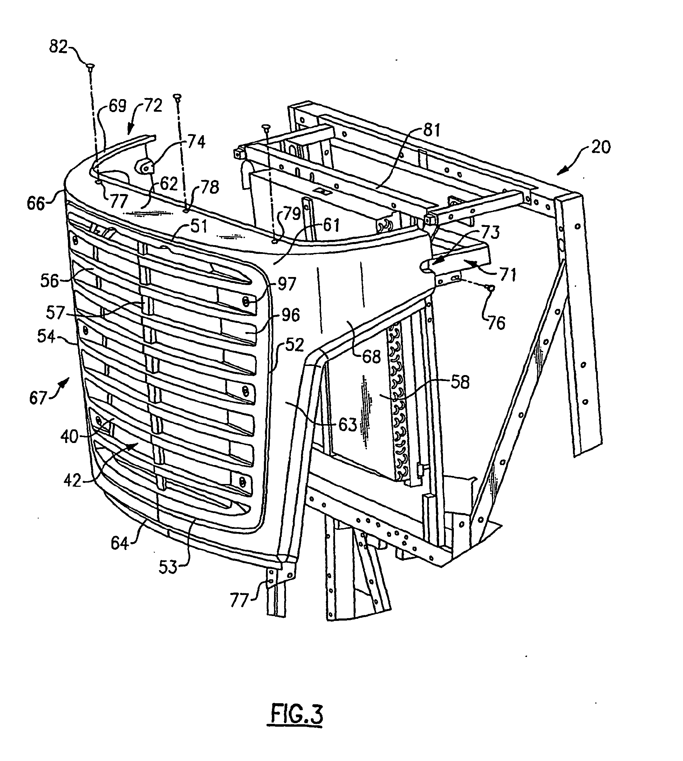

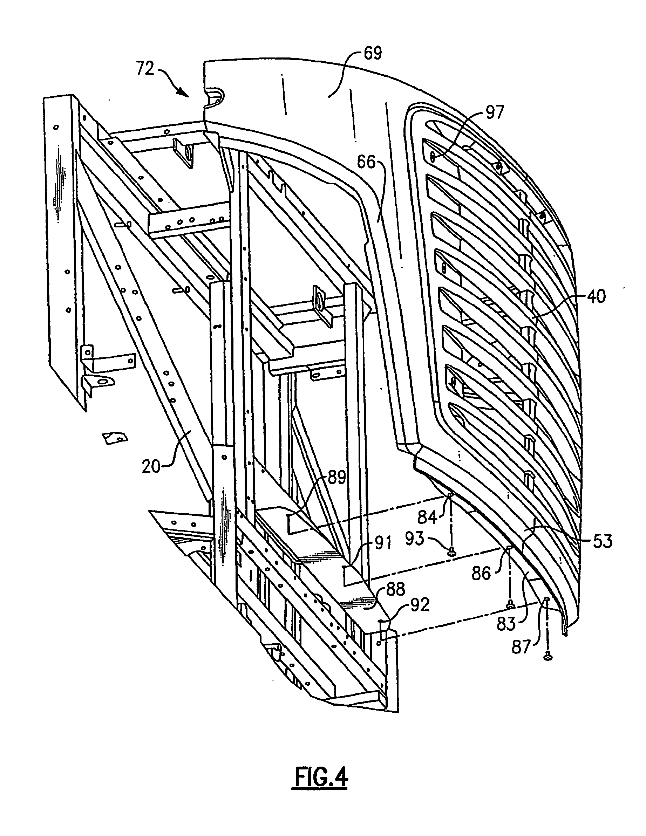

The grille structure 40 is attached to the surround structure 61 as shown in Figs. 3 and 4. Associated with each of the surround structure sides 63 and 66 are three flat land portions 94 which extend inwardly and provide a receiving surface for the flat overlay structure 96 of the grille, and a plurality of fasteners 97 then pass through the openings 98 of the flat overlay structure to attach the grille member 40 to the grille support structure 61.

An important feature of the present invention is that the grille support structure 61 is fabricated of a flexible material so as to damp vibrations that would otherwise be transmitted from the frame 20 to the rigid grille member 40 so as to cause cracking thereof. A material that has been found to be most suitable is a thermoplastic olefin (TPO). Other olefin materials may also be used.

## Claims

1. A transport refrigeration unit (11) of the type adapted to be mounted on the front wall of a trailer for conditioning the interior of the trailer (12), the unit having a structural frame (20) which includes a section to be attached to the trailer and vertically extending members spaced from the front of the trailer for supporting a front cover for enclosing the refrigeration unit, wherein the front cover includes:
a grille (40) having a plurality of openings (42) formed therein for conducting the flow of air to a condenser coil (58) disposed therebehind; and **characterised in that** it further includes:
a support structure (61) attached to and supported by the frame (20), said support structure (61) being composed of a flexible material and being attached to and in surrounding relationship with said grille (40), so as to support said grille (40) and dampen vibrations that would otherwise be transmitted from said frame (20) to said grille (40).

2. A transport refrigeration unit as set forth in claim 1 wherein said support structure (61) is composed of thermoplastic olefin.

3. A transport refrigeration unit as set forth in claim 1 or 2 wherein said support structure (61) includes near its top (62) a rearwardly extending portion on each side thereof

4. A transport refrigeration unit as set forth in claim 3 wherein said rearward extensions include integrally formed members for securing the support structure (61) to said frame (20).

5. A transport refrigeration unit as set forth in any preceding claim wherein said support structure (61) includes a rearwardly extending flange (83) attached to a bottom member for purposes of attaching said support structure (61) to said frame (20).

6. A transport refrigeration unit as set forth in any preceding claim wherein, in addition to the engagement of said grille (40) with said support structure (61) at locations surrounding said grille structure (40), each of the grille structure (40) and support structure (61) have a flat surface on either side thereof to facilitate further engagement and means for attachment between the two structures.

## Patentansprüche

1. Transportkühleinheit (11) des Typs, die an der vorderen Wand eines Trailers anbringbar ist, um das Innere des Trailers (12) zu konditionieren, wobei die Einheit einen Konstruktionsrahmen (20) aufweist, der einen an dem Trailer zu befestigenden Bereich und vertikal verlaufende Elemente aufweist, die von der Vorderseite des Trailers beabstandet sind, um eine vordere Abdeckung zum Umschließen der Kühleinheit abzustützen, wobei die vordere Abdeckung Folgendes aufweist:
einen Kühlergrill (40) mit einer Mehrzahl von darin ausgebildeten Öffnungen (42) zum Leiten der Luftströmung zu einer dahinter angeordneten Kondensatorschlange (58);
**dadurch gekennzeichnet, dass** sie ferner Folgendes aufweist:
eine Halterungskonstruktion (61), die an dem Rahmen (20) angebracht und von diesem abgestützt ist, wobei die Halterungskonstruktion (61) aus einem flexiblen Material gebildet ist und in umgebender Beziehung zu dem Kühlergrill (40) angebracht ist, so dass der Kühlergrill (40) abgestützt ist und Vibrationen gedämpft werden, die sonst von dem Rahmen (20) auf den Kühlergrill (40) übertragen würden.

2. Transportkühleinheit nach Anspruch 1,
wobei die Halterungskonstruktion (61) aus thermoplastischem Olefin gebildet ist.

3. Transportkühleinheit nach Anspruch 1 oder 2,
wobei die Halterungskonstruktion (61) in der Nähe ihrer Oberseite (62) beidseits einen sich nach hinten erstreckenden Bereich aufweist.

4. Transportkühleinheit nach Anspruch 3,
wobei die sich nach hinten erstreckenden Fortsatzbereiche integral ausgebildete Elemente zum Befestigen der Halterungskonstruktion (61) an dem Rahmen (20) aufweisen.

5. Transportkühleinheit nach einem der vorausgehen Ansprüche,
wobei die Halterungskonstruktion (61) einen sich nach hinten erstreckenden Flansch (83) aufweist, der an einem unteren Element angebracht ist, um die Halterungskonstruktion (71) an dem Rahmen (20) anzubringen.

6. Transportkühleinheit nach einem der vorausgehenden Ansprüche,
wobei zusätzlich zu dem Eingriff zwischen dem Kühlergrill (40) und der Halterungskonstruktion (61) an Stellen um den Kühlergrill (40) herum die Kühlergrillkonstruktion (40) und die Halterungskonstruktion (61) jeweils eine ebene Fläche auf beiden Seiten davon zum Erleichtern eines weiteren Eingriffs sowie Mittel zur Befestigung zwischen den beiden Konstruktionen aufweisen.

## Revendications

1. Unité frigorifique de transport (11) du type adaptée pour être montée sur la paroi avant d'une remorque permettant de climatiser l'intérieur de la remorque (12), l'unité comportant un cadre de structure (20) qui inclut une section à attacher à la remorque et des organes s'étendant verticalement espacés depuis l'avant de la remorque pour supporter une couverture avant permettant d'envelopper l'unité de réfrigération, dans laquelle la couverture avant comprend :
une grille (40) comprenant une pluralité d'ouvertures (42) formées dans cette dernière pour conduire le flux d'air vers une bobine de condenseur (58) disposée à l'arrière de celle-ci; et **caractérisée en ce qu'**elle comprend en outre :
une structure de support (61) attachée à et supportée par le cadre (20), ladite structure de support (61) étant composée d'un matériau flexible et étant attachée à et en relation de proximité avec ladite grille (40), de façon à supporter ladite grille (40) et amortir les vibrations qui seraient dans le cas contraire transmises dudit cadre (20) à ladite grille (40).

2. Unité frigorifique de transport selon la revendication 1, dans laquelle ladite structure de support (61) est composée d'une oléfine thermoplastique.

3. Unité frigorifique de transport selon la revendication 1 ou 2, dans laquelle ladite structure de support (61) comprend près de son sommet (62), une portion s'étendant vers l'arrière sur chaque côté de celui-ci.

4. Unité frigorifique de transport selon la revendication 3, dans laquelle lesdites extensions vers l'arrière incluent des organes formés solidairement pour fixer la structure de support (61) audit cadre (20).

5. Unité frigorifique de transport selon l'une quelconque des revendications précédentes, dans laquelle ladite structure de support (61) inclut une bride s'étendant vers l'arrière (83) attachée à un organe inférieur dans le but d'attacher ladite structure de support (61) audit cadre (20).

6. Unité frigorifique de transport selon l'une quelconque des revendications précédentes, dans laquelle, en plus de l'enclenchement de ladite grille (40) avec ladite structure de support (61) à des emplacements au voisinage de ladite structure de grille (40), chacune de la structure de grille (40) et de la structure de support (61) a une surface plate sur n'importe quel de ses côtés pour faciliter un enclenchement supplémentaire et un moyen d'attache mutuelle des deux structures.
